(19) Europäisches Patentamt
European Patent Office
Office européen des brevets

(11) Veröffentlichungsnummer: **0 122 453**
**A1**

# (12) EUROPÄISCHE PATENTANMELDUNG

(21) Anmeldenummer: **84102702.2**

(22) Anmeldetag: **13.03.84**

(51) Int. Cl.³: **C 08 G 63/76**
C 08 G 65/32, C 08 G 18/28
C 08 G 18/42, C 07 C 125/065
C 07 C 103/38, C 08 F 8/30
C 08 F 283/00

(30) Priorität: **23.03.83 DE 3310532**

(43) Veröffentlichungstag der Anmeldung:
**24.10.84 Patentblatt 84/43**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Buschhaus, Hans-Ulrich, Dr.**
**Morgengraben 2**
**D-5000 Köln 80(DE)**

(72) Erfinder: **Findeisen, Kurt, Dr.**
**In der Follmühle 10**
**D-5068 Odenthal 2(DE)**

(72) Erfinder: **Bock, Manfred, Dr.**
**Haydnstrasse 18**
**D-5090 Leverkusen 1(DE)**

(72) Erfinder: **Mirgel, Volker, Dr.**
**Moltkestrasse 9**
**D-5000 Köln 40(DE)**

(72) Erfinder: **Rudolph, Hans, Prof. Dr.**
**Haydnstrasse 9**
**D-4150 Krefeld 1(DE)**

## (54) Verfahren zur Herstellung von blockierte und gegebenenfalls freie Hydroxylgruppen aufweisenden Polyhydroxylverbindungen, die nach diesem Verfahren erhältlichen Polyhydroxylverbindungen und auf diesen Polyhydroxylverbindungen basierende Beschichtungsmittel.

(57) Ein Verfahren zur Herstellung von Polyhydroxylverbindungen mit zumindest teilweise blockierten, alkoholischen Hydroxylgruppen durch Umsetzung von beliebigen, mindestens zwei alkoholische Hydroxylgruppen aufweisenden, ansonsten jedoch unter den Reaktionsbedingungen inerten organischen Verbindungen mit, mindestens eine Struktureinheit der Formel

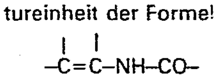

und/oder der Formel

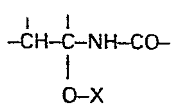

(X = Kohlenwasserstoffrest) aufweisenden, ansonsten unter den Reaktionsbedingungen inerten organischen Verbindungen als Blockierungsmittel, die nach diesem Verfahren erhältlichen Verbindungen mit zumindest teilweise blockierten Hydroxylgruppen und solche Verbindungen sowie Polyisocyanate mit gegebenenfalls blockierten Isocyanatgruppen enthaltende Beschichtungsmittel.

EP 0 122 453 A1

0122453

BAYER AKTIENGESELLSCHAFT
Konzernverwaltung RP
Patentabteilung

5090 Leverkusen, Bayerwerk

Wr/bo/c

Verfahren zur Herstellung von blockierte und gegebenenfalls freie Hydroxylgruppen aufweisenden Polyhydroxylverbindungen, die nach diesem Verfahren erhältlichen Polyhydroxylverbindungen und auf diesen Polyhydroxylverbindungen basierende Beschichtungsmittel

Die vorliegende Erfindung betrifft ein neues Verfahren zur Herstellung von, blockierte alkoholische Hydroxylgruppen und gegebenenfalls freie Hydroxylgruppen aufweisenden Polyhydroxylverbindungen, die nach diesem Verfahren erhältlichen Polyhydroxylverbindungen und hitzevernetzbare Beschichtungsmittel auf Basis derartiger Polyhydroxylverbindungen und organischen Polyisocyanaten mit gegebenenfalls blockierten Isocyanatgruppen, bzw. auf Basis von nicht-vernetzten Umsetzungsprodukten von derartigen Polyhydroxylverbindungen mit überschüssigen Mengen an organischen Polyisocyanaten.

Es ist allgemein bekannt, bei Raumtemperatur lagerfähige, unter der Einwirkung von Hitze in hochmolekulare Polyurethane überführbare Reaktivsysteme dadurch herzustellen, daß man organische Polyhydroxylverbindungen mit vorzugsweise alkoholisch gebundenen Hydroxylgruppen mit

blockierten Polyisocyanaten vermischt (vgl. z.B. Houben-Weyl, Methoden der organischen Chemie, Band XIV/2, 4. Auflage, Georg Thieme Verlag, Stuttgart 1963, Seiten 61-70). Nachteilig hierbei ist aber, daß bei der thermischen Aushärtung derartiger Systeme flüchtige Substanzen, d.h. die zur Blockierung der Isocyanatgruppen eingesetzten Blockierungsmittel, freigesetzt werden. Die Verwendung derartiger Systeme in Beschichtungsmitteln ist außerdem mit dem Nachteil behaftet, daß eine chemische Antrocknung der Beschichtung, z.B. durch Reaktion von freien Isocyanatgruppen mit Luftfeuchtigkeit nicht stattfinden kann, da die Systeme unterhalb der Aushärttemperatur auch gegenüber Luftfeuchtigkeit weitgehend inert sind. Ein weiterer Nachteil derartiger Systeme, insbesondere bei Verwendung von Malonester-blockierten Polyisocyanaten, ist in dem Umstand zu sehen, daß ihre Lagerstabilität bei Raumtemperatur oft noch zu wünschen übrig läßt.

Es war daher die der Erfindung zugrundeliegende Aufgabe, neue Polyhydroxylverbindungen mit zumindest teilweise blockierten Hydroxylgruppen bzw. neue, derartige Polyhydroxylverbindungen enthaltende, Systeme zur Verfügung zu stellen, die einerseits nicht mit den Nachteilen der klassischen Systeme auf Basis von blockierten Polyisocyanaten und freien Polyhydroxylverbindungen behaftet sind, d.h. die bei praktisch beliebig langer Verarbeitbarkeit bei Raumtemperatur ohne Abspaltung von leicht flüchtigen Blockierungsmitteln thermisch in hochmolekulare Polyurethane überführbar sind, und die aufgrund des Vorliegens von freien Isocyanatgruppen bereits vor der thermischen Vernetzung unter dem Einfluß von Luftfeuchtigkeit "chemisch antrocknen", bzw. die andererseits gestatten, die oft nicht befriedigende Lagerstabilität von Kombinationen aus organischen Polyhydroxylverbindungen und blockierten Isocyanaten, insbesondere Malonester-blockierten Polyisocyanaten wesentlich zu erhöhen.

Diese Aufgabe konnte durch die Bereitstellung des nachstehend näher beschriebenen erfindungsgemäßen Verfahrens gelöst werden, bei welchem Polyhydroxylverbindungen mit zumindest teilweise blockierten alkoholischen Hydroxylgruppen erhalten werden, die mit organischen Polyisocyanaten mit gegebenenfalls blockierten Isocyanatgruppen zu lagerstabilen hitzevernetzbaren Gemischen kombiniert werden können.

Gegenstand der Erfindung ist ein Verfahren zur Herstellung von, mindestens zwei alkoholische Hydroxylgruppen aufweisenden, Verbindungen, in denen höchstens eine alkoholische Hydroxylgruppe frei und mindestens eine alkoholische Hydroxylgruppe in reversibel blockierter Form vorliegen, dadurch gekennzeichnet, daß man beliebige, mindestens zwei alkoholische Hydroxylgruppen aufweisende, ansonsten jedoch unter den Reaktionsbedingungen inerte organische Verbindungen bei 0 bis 110°C mit, mindestens eine Struktureinheit der Formel

-C=C-NH-CO-

und/oder der Formel

-CH-C-NH-CO-
O-X

aufweisenden, ansonsten unter den Reaktionsbedingungen inerten organischen Verbindungen als Blockierungsmittel unter Einhaltung eines Äquivalentverhältnisses von Hydroxylgruppen zu Struktureinheiten der genannten allgemeinen Formeln und 0,9:1 bis 2:1 zur Reaktion bringt, wobei

X für einen aliphatischen, cycloaliphatischen oder araliphatischen Kohlenwasserstoffrest mit 1 bis 20 Kohlenstoffatomen, vorzugsweise einen aliphatischen Kohlenwasserstoffrest mit 1 bis 4 Kohlenstoffatomen steht.

Gegenstand der Erfindung sind auch die nach diesem Verfahren erhältlichen, reversibel blockierte und gegebenenfalls freie alkoholische Hydroxylgruppen aufweisende Polyhydroxylverbindungen.

Gegenstand der Erfindung sind auch lagerstabile, unter dem Einfluß von Hitze vernetzbare, ein Bindemittel und gegebenenfalls die aus der Lacktechnologie bekannten Hilfs- und Zusatzmittel enthaltende Beschichtungsmittel, dadurch gekennzeichnet, daß das Bindemittel aus

a) Kombinationen von, gemäß erfindungsgemäßem Verfahren erhältlichen, reversibel blockierte alkoholische Hydroxylgruppen aufweisenden Polyhydroxylverbindungen und Polyisocyanaten mit gegebenenfalls blockierten Isocyanatgruppen

und/oder aus

b) hitzevernetzbaren Umsetzungsprodukten von (i) gemäß erfindungsgemäßem Verfahren erhältlichen reversibel blockierte und freie alkoholische Hydroxylgruppen aufweisenden Polyhydroxylverbindungen mit (ii) überschüssigen Mengen, bezogen auf die freien Hydroxygruppen und die Isocyanatgruppen, an organischen Polyisocyanaten

besteht.

Beim erfindungsgemäßen Verfahren können beliebige, mindestens zwei alkoholische Hydroxylgruppen aufweisende, ansonsten jedoch unter den Bedingungen der erfindungsgemäßen Umsetzung inerte organische Verbindungen eingesetzt werden. Vorzugsweise werden als derartige Verbindungen gegebenenfalls Ether- oder Esterbrücken aufweisende, 2- bis 6-wertige, insbesondere 2- bis 3-wertige aliphatische Alkohole des aus dem Hydroxylgehalt und der Funktionalität berechenbaren bzw., im Falle von verzweigten Polyesterpolyolen, osmometrisch bestimmbaren (mittleren) Molekulargewichts von 62 - 5000, vorzugsweise 62 - 3000, eingesetzt. Dies bedeutet, daß es sich in den bevorzugt einzusetzenden, alkoholische Hydroxylgruppen aufweisenden Verbindungen um die aus der Polyurethanchemie bekannten Polyhydroxylverbindungen handelt. Neben diesen bevorzugten Polyhydroxylverbindungen können beim erfindungsgemäßen Verfahren jedoch auch z.B. höher als 6-werte aliphatische Alkohole oder gegebenenfalls inerte Substituenten aufweisende mehrwertige cycloaliphatische oder araliphatische Alkohole eingesetzt werden. Die beim erfindungsgemäßen Verfahren einzusetzenden, Hydroxylgruppen aufweisenden Verbindungen besitzen vorzugsweise ausschließlich primäre und/oder sekundäre Hydroxylgruppen.

Typische Beispiele für erfindungsgemäß geeignete Verbindungen mit alkoholischen Hydroxylgruppen sind

1. Primäre oder sekundäre Dihydroxyverbindungen mit alkoholisch gebundenen Hydroxylgruppen des Molekulargewichtsbereichs 62 - 300 wie Glykol, 2,2'-Dihydroxydiethylether, 1,2-Bis-(2-hydroxyethoxy)-ethan, Tetraethylenglykol, Bis-(2-hydroxyethyl)-sulfid, 1,2-Propandiol, Dipropylenglykol, Tripropylenglykol, 3-Chlor-1,2-propandiol, 1,3-Propandiol, 1,2-Butandiol, 1,3-Butandiol, 1,4-Butandiol, 2,3-Butandiol, 1,5-Pentandiol, 2,2-Dimethyl-1,3-propandiol, 1,6-Hexandiol, 2,5-Hexandiol, 2,2-Diethyl-1,3-propandiol, 1,12-Octandiol, 2-Buten-1,4-diol, 2-Butin-1,4-diol, 1,2-Cyclohexandiol oder 1,4-Cyclohexandiol.

2. Primäre und/oder sekundäre drei- oder mehrwertige Alkohole des Molekulargewichtsbereichs 92 - 350 wie Glycerin, 2-Hydroxymethyl-2-methyl-, 1,3-propandiol, 1,2,6-Hexantriol, 2-Ethyl-2-hydroxymethyl-1,3-propandiol, 2,2-Bis-hydroxymethyl-1,3-propandiol.

3. Polyester- oder Polyetherpolyole des Molekulargewichtsbereichs 300 - 5000, vorzugsweise 1000 - 3000, welche im allgemeinen 2 - 6, vorzugsweise 2 - 3 alkoholische Hydroxylgruppen aufweisen, und

wie sie aus der Polyurethanchemie an sich bekannt sind (vgl. z.B. US-PS 4 218 543, Kolonne 7, Zeile 29 - Kolonne 9, Zeile 25).

4. Polyacrylat-Polyole einer zwischen 20 und 300, vorzugsweise 35 bis 200 liegenden Hydroxylzahl und eines osmometrisch bestimmbaren, zwischen 1000 und 20 000 liegenden Molekulargewichts der in DE-A-30 10 719 (EP-A-36975) beispielhaft genannten Art.

Reaktionspartner für diese Verbindungen mit alkoholischen Hydroxylgruppen sind beliebige organische Verbindungen, die mindestens eine Struktureinheit der Formel

$$-\overset{|}{C}=\overset{|}{C}-NH-CO-$$

und/oder der Formel

$$-\overset{|}{C}H-\underset{\underset{O-X}{|}}{\overset{|}{C}}-NH-CO-$$

aufweisen, und die ansonsten unter den Bedingungen des erfindungsgemäßen Verfahrens inert sind.

Typische Vertreter derartiger Verbindungen sind solche der Formel

$$R-\overset{\overset{R'}{|}}{C}=\overset{\overset{R''}{|}}{C}-NH-CO-R'''$$

und/oder solche der Formel

$$R-\overset{\overset{R'}{|}}{C}H-\underset{\underset{O-X}{|}}{\overset{\overset{R''}{|}}{C}}-NH-CO-R'''$$

wobei in diesen Formeln

R, R' und R" gleich oder verschieden sind und Wasserstoff oder einen aliphatischen Kohlenwasserstoffrest mit 1 bis 4 Kohlenstoffatomen bedeuten,

R"' für Wasserstoff oder einen gegebenenfalls inerte Substituenten aufweisenden aliphatischen Kohlenwasserstoffrest mit 1 bis 20, vorzugsweise 1 bis 4 Kohlenstoffatomen, cycloaliphatischen Kohlenwasserstoffrest mit 3 bis 15, vorzugsweise 6 Kohlenstoffatomen, aromatischen Kohlenwasserstoffrest mit 6 bis 15, vorzugsweise 6 bis 10 Kohlenstoffatomen, araliphatischen Kohlenwasserstoffrest mit 7 bis 15, vorzugsweise 7 bis 8 Kohlenstoffatomen, einen Aroxyrest mit 6 bis 15 Kohlenstoffatomen, vorzugsweise Phenoxyrest oder einen Alkoxyrest mit 1 bis 10, vorzugsweise 1 bis 4 Kohlenstoffatomen, der gegebenenfalls, jedoch weniger bevorzugt, Substituenten der Formel

$$\begin{array}{l} \quad R' \quad R'' \\ \quad | \quad\;\; | \\ R-C = C-NH-CO-O- \end{array}$$

und/oder

$$\begin{array}{l} \quad R' \;\; R'' \\ \quad | \quad\; | \\ R-CH-C-NH-CO-O- \\ \quad | \\ \quad O-X \end{array}$$

aufweist, steht und

X die bereits obengenannte Bedeutung hat.

Es handelt sich somit bei den bevorzugt einzusetzenden Reaktionspartnern für die Polyhydroxylverbindungen um, gegebenenfalls am Vinylrest alkylsubstituierte N-Vinylamide organischer Säure, um gegebenenfalls am Vinylrest alkylsubstituierte N-Vinylurethane, um N-(α-Alkoxyalkyl)-, N-(α-Cycloalkoxyalkyl)- oder N-(α-Aralkoxyalkyl)-amide und/oder um entsprechend in α-Stellung substituierte N-Alkylurethane wie z.B. N-Vinylformamid, N-Vinylacetamid, N-Vinylpropionamid, N-Vinylbutyramid, N-Vinylpivaloylamid, N-1-Propenylacetamid, N-Isopropenylacetamid, N-1-Butenylformamid, N-Vinylacrylsäureamid, N-Vinylmethacrylsäureamid, N-1-Butenylacetamid, N-(1-Buten-2-yl)-acetamid, N-(2-Buten-2-yl)-acetamid, N-Vinyl-cyclohexancarbonsäureamid, N-Vinylbenzoesäureamid, N-Vinyl-phenylessigsäureamid, N-Vinylcarbamidsäuremethylester, N-Vinylcarbamidsäureethylester, N-Vinylcarbamidsäurepropylester, N-Vinylcarbamidsäurebutylester, N-1-Propenylcarbamidsäuremethylester, N-1-Butenylcarbamidsäureethylester, N-(2-Buten-2-yl)-carbamidsäureethylester, N-Vinylcarbamidsäurephenylester oder um höherfunktionelle Urethane wie z.B. 1,2-Bis-(vinylamino-carbonyl-oxy)-ethan (Umsetzungsprodukt von 2 Mol Vinylisocyanat mit 1 Mol Ethylenglykol) oder 1,2,3-Tris-(vinylamino-carbonyl-oxy)-propan (Umsetzungsprodukt von 3 Mol Vinylisocyanat mit 1 Mol Glycerin), N-(α-Methoxy-ethyl)-O-methylurethan, N-(α-Ethoxy-ethyl)-O-methylurethan, N-(α-Methoxy-ethyl)-acetamid, N-(α-Ethoxy-ethyl)-acetamid, N-(α-Methoxy-ethyl)-formamid, N-(α-Ethoxy-ethyl)-formamid, N-(α-Cyclohexoxy-ethyl)-acetamid, N-(α-Benzyloxy-ethyl)-acetamid oder N-(α-Benzyloxy-ethyl)-O-methylurethan.

Weitere für das erfindungsgemäße Verfahren geeignete, die obengenannten Struktureinheiten aufweisende Blockierungsmittel sind z.B. die entsprechenden Harnstoffe wie N-Vinyl-N'-methylharnstoff, N-Vinyl-N'-ethylharnstoff, N-Vinyl-N'-butylharnstoff, N-1-Propenyl-N'-methylharnstoff, N-Vinyl-N'-phenylharnstoff, N-1-Propenylharnstoff, N-($\alpha$-Ethoxy-ethyl)-harnstoff oder N-($\alpha$-Methoxy-ethyl)-N'-methylharnstoff.

Beim erfindungsgemäßen Verfahren können beliebige Mischungen der beispielhaft genannten Blockierungsmittel eingesetzt werden.

Die beispielhaft genannten, erfindungsgemäß geeigneten Blockierungsmittel und den beispielhaft genannten Verbindungen analoge, die obengenannten charakteristischen Struktureinheiten aufweisende Verbindungen bzw. ihre Herstellung gehören zum an sich bekannten Stand der Technik (vgl. z.B. P. Kurtz und H. Disselnkötter, Liebigs Ann. Chem. 764, 69 (1972); R.C. Schulz und H. Hartmann, Monatshefte 92, 303 (1961); EP-A-00 09 697, DE-A-16 68 038, EP-A-00 30 609, DE-A-30 30 544, EP-A-00 19 225, EP-A-00 19 226, DE-A-25 03 114 oder US-A-3 715 385). So sind beispielsweise N-($\alpha$-Methoxyalkyl)-urethane durch elektrochemische Oxidation von N-Alkylurethanen gemäß EP-A-00 09 697 zugänglich, die Herstellung von, andere $\alpha$-Substituenten der oben beispielhaft genannten Art aufweisenden N-Alkylurethanen kann in Analogie zu der in EP-A- 00 09 697 beschriebenen Arbeitsweise erfolgen. Die DE-A-16 86 083 lehrt beispielsweise die Herstellung

von N-Acyl-monovinylaminen der oben beispielhaft genannten Art durch thermische Abspaltung von Cyanwasserstoff aus den entsprechenden N-Acyl-(1-cyanoalkyl)-aminen. N-Vinylurethane können durch Kondensation von Aldehyden mit Carbamaten gemäß EP-A-00 55 359 erhalten werden. Gemäß EP-A-00 30 609 führt die Umsetzung von Carbonsäureamiden mit $\alpha$-Halogenalkylethern zu den entsprechenden, als erfindungsgemäße Blockierungsmittel für Polyhydroxylverbindungen geeigneten N-($\alpha$-Alkoxyalkyl)-carbonsäureamiden.

Bei der erfindungsgemäßen Umsetzung erfolgt bei Verwendung von Vinylverbindungen der beispielhaft genannten Art eine Anlagerung der alkoholischen Hydroxylgruppe an die Vinylgruppe wie nachstehend am Beispiel der Reaktion zwischen N-Vinylcarbamidsäuremethylester und Ethanol erläutert sei:

$$CH_2{=}CH{-}NH{-}\underset{\overset{\|}{O}}{C}{-}OCH_3 + C_2H_5OH \xrightarrow{Kat.} CH_3{-}\underset{OC_2H_5}{CH}{-}NH{-}\underset{\overset{\|}{O}}{C}{-}OCH_3$$

Diese Additionsreaktion ist reversibel, so daß die Additionsverbindung beim Erwärmen auf oberhalb 110°C liegende Temperaturen den angelagerten Alkohol abspalten.

Bei Verwendung von N-($\alpha$-Alkoxyalkyl)-amiden (oder -urethanen) erfolgt ein Austausch der $\alpha$-Alkoxygruppe unter Bildung einer anderen Alkoxyverbindung wie nachstehend am Beispiel der Reaktion zwischen N-($\alpha$-Methoxyethyl)-O-methylurethan und Stearylalkohol erläutert sei:

$$CH_3-\underset{OCH_3}{CH}-NH-\overset{O}{\overset{\|}{C}}-OCH_3 + C_{18}H_{37}OH \longrightarrow CH_3-\underset{OC_{18}H_{37}}{CH}-NH-\overset{O}{\overset{\|}{C}}-OCH_3 + CH_3OH$$

Die erfindungsgemäße Umsetzung erfolgt bei Verwendung von Vinylverbindungen der beispielhaft genannten Art vorzugsweise in Gegenwart von basischen Katalysatoren wie z.B. tertiären Aminen oder Alkalimetallalkoholaten. Bei der Verwendung von $\alpha$-substituierten N-Alkylverbindungen der beispielhaft genannten Art ist die Mitverwendung derartiger Katalysatoren nicht erforderlich.

Geeignete Katalysatoren sind beispielsweise tertiäre Amine wie Trimethylamin, Triethylamin, Tributylamin, Triisobutylamin, Tetramethylethylendiamin, Bis-(2-Dimethylaminoethyl)-methylamin, 1-Methylpyrrolidin, 1-Methylpiperidin, 1,4-Dimethylpiperazin oder 4-Methylmorpholin.

Geeignete Alkalimetall-Alkoholat-Katalysatoren sind z.B. Natriummethylat, Natriumethylat, Kaliummethylat oder Kalium-tert.-butylat.

Besonders bevorzugt werden bei dem erfindungsgemäßen Verfahren leicht flüchtige Trialkylamin-Katalysatoren, wie Trimethylamin oder Triethylamin, die gewünschtenfalls nach der erfindungsgemäßen Reaktion destillativ entfernt werden können, verwendet.

Bei der Verwendung von Alkalimetall-Alkoholat-Katalysatoren werden diese bevorzugt nach erfolgter Umsetzung der OH-gruppenhaltigen Komponenten durch Zugabe stöchiometrischer Mengen von Säuren wie z.B. Salzsäure, Schwefelsäure, Phosphorsäure oder p-Toluolsulfonsäure neutralisiert.

Das erfindungsgemäße Verfahren kann in Gegenwart von Lösungsmitteln oder lösungsmittelfrei durchgeführt werden. Gegebenenfalls einzusetzende Lösungsmittel sind z.B. halogenierte Kohlenwasserstoffe wie Methylenchlorid, Chloroform, Trichlorethan, Chlorbenzol, 1,2-Dichlorbenzol, Toluol, Xylol, Hexan, Petrolether, Waschbenzin, Benzin und Benzingemische, wie sie in der Lackindustrie verwendet werden, Ethylglykolacetat, Glykolmonomethyletheracetat und/oder Gemische der genannten Lösungsmittel.

Die erfindungsgemäße Umsetzung kann im Temperaturbereich von 0 - 110°C, bevorzugt 20 - 110°C und besonders bevorzugt im Bereich von 70 - 100°C durchgeführt werden.

Bei der Durchführung des erfindungsgemäßen Verfahrens kommen die Reaktionspartner im allgemeinen in, einem Äquivalentverhältnis von Hydroxylgruppen zu N-Vinyl- bzw. $\alpha$-Alkoxyalkyl-Gruppen von 0,9:1 bis 2:1, vorzugsweise 0,9:1 bis 1,5:1, insbesondere 1:1, entsprechenden Mengen zum Einsatz. Bei der Durchführung des erfindungsgemäßen Verfahrens muß jedoch auf jeden Fall beachtet werden, daß das Äquivalentverhältnis der Reaktionspartner innerhalb der genannten Bereiche so gewählt wird, daß Umsetzungsprodukte entstehen, die mindestens eine blockierte und höchstens eine freie Hydroxylgruppe aufweisen.

Falls beim erfindungsgemäßen Verfahren α-substituierte N-Alkylverbindungen der beispielhaft genannten Art eingesetzt werden, handelt es sich bei diesen vorzugsweise um solche N-Alkyl-amide bzw. -urethane deren α-Substituent aus einem $C_1$-$C_4$-Alkoxy-Rest besteht, so daß es sich bei dem, gemäß letztgenannter Reaktionsgleichung freigesetzten Alkohol um einen niedrigsiedenden, aliphatischen Alkohol mit 1 bis 4 Kohlenstoffatomen handelt, der zweckmäßigerweise während der Umsetzung zur Erreichung des gewünschten Umsetzungsgrades, gegebenenfalls unter vermindertem Druck, destillativ aus dem Reaktionsgemisch entfernt wird.

Die Wahl der Art und Mengenverhältnisse der beim erfindungsgemäßen Verfahren einzusetzenden Ausgangsmaterialien richtet sich in erster Linie nach dem beabsichtigten Verwendungszweck für die erfindungsgemäßen Verfahrensprodukte.

Wie bereits aus den obigen Ausführungen ersichtlich, ist es nicht erforderlich, alle freien Hydroxylgruppen der zu blockierenden Polyhydroxylverbindung zu blockieren, es ist jedoch wesentlich, daß die erfindungsgemäßen Verfahrensprodukte im statistischen Mittel maximal eine Hydroxylgruppe pro Molekül aufweisen, um zu verhindern, daß bei der Kombination der erfindungsgemäßen Verfahrensprodukte mit organischen Polyisocyanaten eine vorzeitige Vernetzung stattfindet. Andererseits kann die Anwesenheit von maximal einer Hydroxylgruppe pro Molekül in den erfindungsgemäßen Verfahrensprodukten durchaus erwünscht

sein, da so bei der Kombination der Verfahrensprodukte mit organischen Polyisocyanaten sofort eine teilweise Reaktion mit den Polyisocyanaten stattfindet, so daß nach dieser Teilreaktion noch verarbeitbare Systeme vorliegen. Eine derartige unvollständige Vorreaktion (Addition eines Teils der Isocyanatgruppen an die freien Hydroxylgruppen) kann in besonderen Fällen erwünscht sein, beispielsweise wenn hochviskose Systeme, beispielsweise Dichtungsmassen, hergestellt werden sollen, die erst bei hoher Temperatur in den vernetzten Zustand übergehen.

Die erfindungsgemäßen Verfahrensprodukte können im allgemeinen, gegebenenfalls nach destillativer Entfernung des mitverwendeten Lösungsmittels, ohne weitere Reinigungsoperation ihrem jeweiligen Verwendungszweck zugeführt, beispielsweise zur Herstellung der erfindungsgemäßen Beschichtungsmittel eingesetzt werden.

Zur Herstellung der erfindungsgemäßen Beschichtungsmittell werden die erfindungsgemäßen Verfahrensprodukte mit den aus der Polyurethanchemie an sich bekannten Polyisocyanaten, deren Isocyanatgruppen gegebenenfalls in blockierter Form vorliegen können, unter Einhaltung eines Äquivalentverhältnisses von, gegebenenfalls blockierten, Isocyanatgruppen zu freien und blockierten Hydroxylgruppen von 2:1 bis 0,5:1, vorzugsweise 1.1:1 bis 0,9:1, vermischt. Diesen Mischungen oder den zu ihrer Herstellung eingesetzten Ausgangskomponenten können zusätzlich die aus der Polyurethanchemie, insbesondere aus der Lacktechnologie an sich bekannten Hilfs- und Zusatzmittel, wie z.B. Lösungsmittel, Pigmente, Füllstoffe, Verlaufshilfsmittel, u.dgl. zugesetzt werden.

Für die Herstellung der erfindungsgemäßen Beschichtungsmittel eignen sich alle beliebigen Polyisocyanate der Polyurethanchemie wie z.B. 2,4- und/oder 2,6-Diisocyanatotoluol, 4,4'-Diisocyanatodiphenylmethan und dessen technische Gemische mit 2,4'-Diisocyanatodiphenylmethan und/oder höheren Homologen, Hexamethylendiisocyanat, Biuretpolyisocyanat auf Basis von Hexamethylendiisocyanat, Isophorondiisocyanat oder 4,4'-Diisocyanato-cyclohexylmethan. Besonders gut geeignet sind die an sich bekannten "Lackpolyisocyanate", d.h. insbesondere Biuret-, Urethan- oder Isocyanuratgruppen aufweisende Polyisocyanate einer über 2, vorzugsweise zwischen 2,5 und 6 liegenden mittleren NCO-Funktionalität eingesetzt. Diese Polyisocyanate weisen vorzugsweise aromatisch, cycloaliphatisch oder aliphatisch gebundene Isocyanatgruppen auf. Für lichtechte Beschichtungen werden Polyisocyanate mit aliphatisch und/oder cycloaliphatisch gebundenen Isocyanatgruppen bevorzugt. Die erfindungsgemäß einzusetzenden Lackpolyisocyanate werden durch an sich bekannte Modifizierung von einfachen organischen Diisocyanaten unter Biuret-, Urethan- oder Isocyanuratbildung hergestellt, wobei jeweils nach der Modifizierungsreaktion evtl. noch vorliegende Überschüsse an nicht-modifiziertem monomerem Ausgangsisocyanat in an sich bekannter Weise, vorzugsweise durch Destillation, so weit entfernt werden, daß in den erfindungsgemäß einzusetzenden Lackpolyisocyanaten höchstens 0,7, vorzugsweise 0,5 Gew.-%, an überschüssigem Diisocyanat vorliegen. Die erfindungsgemäß einzusetzenden Lackpolyisocyanate weisen im allgemeinen einen NCO-Gehalt im Bereich von 10 bis 30 Gew.-% auf.

Geeignete Diisocyanate zur Herstellung der Lackpolyisocyanate sind beispielsweise 2,4- und/oder 2,6-Diisocyanatotoluol, 2,4'-Diisocyanato-dicyclohexylmethan, 4,4'-Diisocyanato-dicyclohexylmethan, Hexamethylendiisocyanat oder 1-Isocyanato-3,3,5-trimethyl-5-isocyanatomethyl-cyclohexan (IPDI). 2,4-Diisocyanatotoluol, Hexamethylendiisocyanat und IPDI stellen die bevorzugten Diisocyanate zur Herstellung der erfindungsgemäß einzusetzenden Lackpolyisocyanate dar. Die Herstellung der Lackpolyisocyanate aus den beispielhaft genannten Ausgangsdiisocyanaten erfolgt nach bekannten Methoden des Standes der Technik. So kann beispielsweise die Herstellung der Biuretgruppen aufweisenden Lackpolyisocyanate nach dem Verfahren der US-Patentschriften 3 124 605, 3 358 010, 3 903 126, 3 903 127 oder 3 976 622 erfolgen. Die Herstellung von erfindungsgemäß einsetzbaren Urethanpolyisocyanaten geschieht beispielsweise gemäß US-PS 3 183 112, während die Herstellung von Isocyanuratgruppen aufweisenden, erfindungsgemäß geeigneten Lackpolyisocyanaten, beispielsweise nach den Verfahren der GB-PSen 1 060 430, 1 234 972, 1 506 373 oder 1 458 564 bzw. gemäß US-PS 3 394 111, US-PS 3 645 979 oder US-PS 3 919 218 erfolgt.

Zu den besonders bevorzugten Lackpolyisocyanaten gehören die Biuretgruppen aufweisenden Polyisocyanate gemäß US-PS 3 124 605, insbesondere jene auf Basis

von Hexamethylendiisocyanat, die Urethangruppen aufweisenden Polyisocyanate gemäß US-PS 3 183 112, insbesondere jene auf Basis von 2,4-Diisocyanatotoluol, Trimethylolpropan und den verschiedenen Butandiolen, sowie die bekannten Isocyanuratgruppen aufweisenden Polyisocyanate auf Basis von 2,4-Diisocyanatotoluol, Hexamethylendiisocyanat, IPDI, Gemischen von 2,4-Diisocyanatotoluol mit Hexamethylendiisocyanat oder Gemischen von Hexamethylendiisocyanat mit IPDI.

Anstelle der beispielhaft genannten Polyisocyanate mit freien Isocyanatgruppen können zur Herstellung der erfindungsgemäßen Beschichtungsmittel auch die entsprechenden, mit an sich bekannten Blockierungsmitteln blockierten Polyisocyanate eingesetzt werden. Als Blokkierungsmittel seien beispielhaft Butanonoxim, Malonsäurediethylester, $\varepsilon$-Caprolactam, Phenol, Kresol, Acetessigsäureethylester und Triazol genannt.

Da jedoch erfindungsgemäße Beschichtungsmittel auf Basis der erfindungsgemäßen Verfahrensprodukte und Polyisocyanaten mit freien Isocyanatgruppen bereits eine ausreichende Lagerstabilität aufweisen, ist der Einsatz von blockierten Polyisocyanaten keinesfalls erforderlich und auch weniger bevorzugt. Die Verwendung der erfindungsgemäßen Verfahrensprodukte anstelle der klassischen Polyhydroxylverbindungen mit freien Hydroxylgruppen führt jedoch insbesondere im Falle der Verwendung von Malonsäureester-blockierten Polyisocyanaten zu einer beträchtlichen Verbesserung der oftmals nicht völlig ausreichenden Lagerstabilität von Systemen auf Basis dieser speziellen, blockierten Polyisocyanaten.

Die erfindungsgemäßen Beschichtungsmittel eignen sich insbesondere zur Herstellung von Überzügen auf hitzeresistenten Substraten. Die erfindungsgemäßen Beschichtungsmittel sind, abgesehen von der im allgemeinen nicht störenden Vorreaktion zwischen einem Teil der Isocyanatgruppen und gegebenenfalls vorliegenden freien Hydroxylgruppen, bei 50°C, insbesondere bei Raumtemperatur, praktisch unbegrenzt lagerfähig und können zu einem beliebigen Zeitpunkt nach ihrer Herstellung verarbeitet werden. Mit derartigen Systemen auf hitzeresistente Substrate nach beliebigen Methoden der Lacktechnologie aufgetragene Überzüge härten nach ca. 15- bis 60-minütigem Erhitzen auf oberhalb 110°C, insbesondere 120 - 160°C zu hochwertigen Lacküberzügen aus.

Bei der Verarbeitung der erfindungsgemäßen Beschichtungsmittel werden die erfindungswesentlichen Blockierungsmittel für die Polyhydroxylverbindung, d.h. olefinische Doppelbindungen aufweisende Verbindungen der oben beispielhaft genannten Art freigesetzt. Gemäß einer bevorzugten Ausführungsform werden daher den Beschichtungsmitteln Radikalbildner in einer Menge von 0,1 bis 2, vorzugsweise 0,3 bis 1,0 Gew.-%, bezogen auf Feststoff der Beschichtungsmittel, einverleibt, die bei der Hitzevernetzung der mit den Beschichtungsmitteln hergestellten Überzüge eine Polymerisation der freigesetzten Blockierungsmittel initiieren. Auf diese Weise kann die Freisetzung von flüchtigen Spaltprodukten bei der Verarbeitung der erfindungsgemäßen Beschichtungsmittel verhindert werden. Die polymerisierten Blockierungsmittel verbleiben in der letztlich erhaltenen Lackschicht, ohne deren lacktechnischen Eigenschaften nachteilhaft zu beeinflussen. Durch Zusatz von Radikalbildnern kann vielmehr oft die Härte und Chemikalienbeständigkeit der Beschichtungen erhöht werden. Geeignete Radikalbildner sind insbesondere organische Peroxide wie z.B. Benzoylperoxid, tert.-Butylhydroperoxid, Bis-(2,4-dichlorbenzoyl)-peroxid oder Di-tert.-butylperoxid oder auch Azoverbindungen wie z.B. Azo-bis-isobutyronitril.

In den nachstehenden Beispielen beziehen sich alle Prozentangaben auf Gewichtsprozente.

Beispiel 1

250 g einer 60 %igen Lackbenzin-Lösung eines kurzöligen Alkydharzes auf Basis gesättigter Fettsäuren mit der OH-Zahl 51 werden mit 28 g N-Vinyl-methylurethan (entsprechend einem Äquivalentverhältnis von Hydroxylgruppen zu Vinylgruppen von 1:1) und 4 ml Triethylamin 4 h bei 90°C gerührt. Das Triethylamin wird bei 70°C i.V. abgezogen.
OH-Zahl nach Umsetzung: 3

Beispiel 2

110 g einer 65 %igen Ethylglykolacetat-Lösung eines Polyesters aus Phthalsäureanhydrid, Maleinsäureanhydrid (Molverhältnis 2:1) und Trimethylolpropan, OH-Zahl 165, werden mit 32,7 g N-Vinyl-methylurethan (entsprechend einem Äquivalentverhältnis von Hydroxylgruppen zu Vinylgruppen von 1:1) und 2 ml Triethylamin 4 h bei 80°C gerührt und anschließend das Triethylamin i.V. abgezogen.
OH-Zahl nach Umsetzung: 4

Beispiel 3

1000 g einer 65 %igen Lösung in Ethylglykolacetat des in Beispiel 2 verwendeten Polyesters werden mit 391,2 g N-($\alpha$-Methoxyethyl)-O-methyl-urethan gemischt (entsprechend einem Äquivalentverhältnis von Hydroxylgruppen zu Methoxyethyl-Gruppen von 1:1) und unter einem Druck von 100 mbar während 300 Minuten bei 100°C gerührt. Es

werden insgesamt 89,5 g Methanol (95,1 % der Theorie) abdestilliert. OH-Zahl nach Umsetzung: 2

Beispiel 4

20 g eines gemäß Beispiel 2 hergestellten Produktes werden mit 8,28 g biuretisierten Hexamethylendiisocyanats (NCO-Gehalt: 24,15 %) gemischt (entsprechend einem Äquivalentverhältnis von freien und blockierten Hydroxylgruppen zu Isocyanatgruppen von 1:1,05) und bei 25°C gelagert. Nach 2 Monaten Lagerung ist die Mischung noch gut verarbeitbar, während Mischungen des in Beispiel 2 verwendeten Polyesters in Abmischung mit dem in diesem Beispiel verwendeten Isocyanat nach 24 h Lagerung bei 25°C aushärten.

Die gemäß diesem Beispiel hergestellte Mischung wird auf entfettete Glasplatten aufgezogen und bei verschiedenen Temperaturen 30 Min. eingebrannt.

| Temperatur | Klebrigkeit | Acetontest |
|---|---|---|
| 100°C | stark | löslich |
| 110°C | stark | löslich |
| 120°C | klebfrei | schwach angelöst |
| 130°C | klebfrei | acetonfest |
| 140°C | klebfrei | acetonfest |

Beispiel 5

20 g eines gemäß Beispiel 2 hergestellten Produktes werden mit 15,37 g eines mit Malonsäurediethylester blokkierten Polyisocyanats auf Basis eines Hexamethylendiisocyanat-Trimerisats gemischt (entsprechend einem Äquivalentverhältnis von freien und blockierten Hydroxylgruppen zu blockierten Isocyanatgruppen von 1:1,05), mit einem Gemisch aus Ethylglykolacetat/Xylol (1:1) auf Verspritzbarkeit eingestellt (30 Sekunden im DIN-4-Becher), auf Glasplatten bzw. Eisenbleche in einer Naßfilmdicke von ca. 0,04 mm gespritzt und bei 140° bis 180°C während 30 Min. eingebrannt.

Die Lackfilme werden verglichen mit den entsprechenden Filmen aus dem in Beispiel 2 verwendeten Polyester und dem in diesem Beispiel verwendeten blockierten Polyisocyanat.

| | Temp. | blockierter Polyester + blockiertes Polyisocyanat | Polyester + blockierter Polyisocyanat |
|---|---|---|---|
| Acetontest | 140°C | acetonfest | acetonfest |
| | 160°C | acetonfest | acetonfest |
| | 180°C | acetonfest | acetonfest |
| Pendelhärte nach DIN 53 157 | 140°C | ca. 200 sec | ca. 204 sec |
| | 160°C | ca. 208 sec | ca. 200 sec |
| | 180°C | ca. 205 sec | ca. 213 sec |
| Viskosität bei Rt; DIN-4-Becher | nach 1 d | 60 sec | 60 sec |
| | nach 7 d | 63 sec | 81 sec |
| | nach 14 d | 67 sec | 107 sec |

Beispiel 6

20 g eines gemäß Beispiel 2 hergestellten Produktes werden mit 14,37 g eines mit Malonsäurediethylester blockierten, biuretisierten Hexamethylendiisocyanats (gemäß Beispiel 4) gemischt (entsprechend einem Äquivalentverhältnis von freien und blockierten Hydroxylgruppen zu blockierten Isocyanatgruppen von 1:1,05) und mit 1 g Dibutylphthalat (Weichmacher), sowie mit 0,2 g Benzoylperoxid in 1 g desselben Weichmachers versetzt. Nach Einstellen auf eine Viskosität von 30 Sekunden/DIN 4-Becher mit Ethylglykolacetat/Xylol (1:1) und Aufspritzen der Mischung auf eine Glasplatte in einer Naßfilmdicke von ca. 0,04 mm wurde jeweils bei 120°C, 140°C und 160°C während 30 Min. eingebrannt und die Filme miteinander verglichen.

| | Temp. | ohne Peroxid | mit Peroxid |
|---|---|---|---|
| Anlösbarkeit* | 120°C | 2233 | 0123 |
| | 140°C | 0023 | 0003 |
| | 160°C | 0003 | 0000 |
| Pendelhärte nach DIN 53 157 | 120°C | ca. 164 sec | ca. 207 |
| | 140°C | ca. 198 sec | ca. 205 |
| | 160°C | ca. 203 sec | ca. 209 |

* geprüft in der Reihenfolge: Toluol, Ethylglykolacetat, Ethylacetat, Aceton; 1 Min. Bewertung 0 - 5: 0 = keine Anlösbarkeit, 3 = Quellung, 5 = Lösung

Auf die Viskositätsstabilität der Lackmischungen hat Benzoylperoxid keinen Einfluß.

Beispiel 7

1318 g eines Polyesters auf Basis von 31,36 Gew.-Teilen Phthalsäureanhydrid, 2,84 Gew.-Teilen Maleinsäureanhydrid, 14,49 Gew.-Teilen Ethylhexansäure, 14,49 Gew.-Teilen Benzoesäure und 45,11 Gew.-Teilen Trimethylolpropan, 80%ig in EGA, OH-Gehalt 4,4% werden mit 500 g N-(α-Methoxyethyl)-O-Methylurethan* 5 h bei 90°C und 100 mbar gerührt; dabei werden 106,5 g Methanol (97,6 % der Theorie) abdestilliert. Der Rückstand ist OH-frei.

* (Äquivalentverhältnis OH: Methoxy-Gruppen 1:1)

Beispiel 8

100 g des Produktes aus Beispiel 7 werden mit 0,6 g Benzoylperoxid und 36 g eines Hexamethylendiisocyanat-Biurets (entsprechend einem Äquivalentverhältnis von freien und blockierten Hydroxylgruppen zu Isocyanatgruppen von 1:1,05) gemischt. Die Mischung hat eine Viskositätsstabilität von mehreren Wochen. Unter Einbrennbedingungen von 30 min./140°C resultiert ein Lackfilm (A) mit den folgenden Prüfwerten (siehe Tabelle).

Ein Vergleichsversuch (B) mit der unblockierten Polyesterpolyol-Komponente hat dagegen eine Viskositätsstabilität von nur 3 Stunden.

| | A | | B | |
|---|---|---|---|---|
| Anlösbarkeit | 1 min. | 5 min. | 1 min. | 5 min. |
| Toluol | 0 | 0 | 0 | 0 |
| Ethylglykolacetat | 0 | 0 | 0 | 0 |
| Ethylacetat | 0 | 0 | 0 | 0 |
| Aceton | 0 | 0 | 0 | 0 |
| Pendelhärte (DIN 53 157) | 198 sec | | 174 sec | |
| Erichsentiefung (DIN 53 156) | 9,6 mm | | 9,8 mm | |

Beispiel 9

1480 g eines handelsüblichen Polyacrylatharzes mit einem OH-Gehalt von 3,0% (Polyacrylatharz KL-5-2576 der BAYER AG, Leverkusen), 70%ig in Butylacetat/Xylol 1:1, werden mit 347 g N-($\alpha$-Methoxyethyl)-O-methylurethan (Äquivalentverhältnis OH : Methoxy-Gruppen 1:1) 7 h bei 90°C/100 mbar gerührt; dabei werden 78,5 g Methanol (94,1 % der Theorie) abdestilliert. Der Rückstand ist OH-frei.

Beispiel 10

100 g des Produktes aus Beispiel 9 werden mit 0,6 g Benzoylperoxid und 26,8 g eines Hexamethylendiisocyanat-Biurets (entsprechend einem Äquivalentverhältnis

von blockierten Hydroxylgruppen zu Isocyanatgruppen von 1:1,05) gemischt. Die Mischung (A) ist mehrere Wochen viskositätsstabil. Ein entsprechender Versuch (Parallelversuch (B)) unter Verwendung des gleichen, jedoch unblockierten Polyacrylatharzes führt zu einer Mischung, die bei Raumtemperatur lediglich eine Viskositätsstabilität von 2 Stunden aufweist.

Unter Einbrennbedingungen (30 min./140°C) resultieren Lackfilme mit folgenden Eigenschaften (vgl. Tabelle):

| | A | | B | |
|---|---|---|---|---|
| Anlösbarkeit | 1 min. | 5 min. | 1 min. | 5 min. |
| Toluol | 0 | 0 | 0 | 0 |
| Ethylglykolacetat | 0 | 0 | 0 | 0 |
| Ethylacetat | 0 | 0 | 0 | 0 |
| Aceton | 0 | 0 | 0 | 0 |
| Erichsentiefung (DIN 57 156) | 9,2 mm | | 8,6 mm | |
| Pendelhärte (DIN 53 157) | 178 sec. | | 167 sec. | |

Patentansprüche

1. Verfahren zur Herstellung von, mindestens zwei alkoholische Hydroxylgruppen aufweisenden, Verbindungen, in denen höchstens eine alkoholische Hydroxylgruppe frei und mindestens eine alkoholische Hydroxylgruppe in reversibel blockierter Form vorliegen, dadurch gekennzeichnet, daß man beliebige, mindestens zwei alkoholische Hydroxylgruppen aufweisende, ansonsten jedoch unter den Reaktionsbedingungen inerte organische Verbindungen bei 0 bis 110°C mit, mindestens eine Struktureinheit der Formel

```
 ' '
-C=C-NH-CO-
```

und/oder der Formel

```
 '  '
-CH-C-NH-CO-
    '
    O-X
```

aufweisenden, ansonsten unter den Reaktionsbedingungen inerten organischen Verbindungen als Blokkierungsmittel unter Einhaltung eines Äquivalentverhältnisses von Hydroxylgruppen zu Struktureinheiten der genannten allgemeinen Formeln von 0,9:1 bis 2:1 zur Reaktion bringt, wobei

X für einen aliphatischen, cycloaliphatischen oder araliphatischen Kohlenwasserstoffrest mit 1 bis 20 Kohlenstoffatomen, vorzugsweise einen aliphatischen Kohlenwasserstoffrest mit 1 bis 4 Kohlenstoffatomen steht.

2. Verfahren gemäß Anspruch 1, dadurch gekennzeichnet, daß man als Blockierungsmittel Verbindungen der Formel

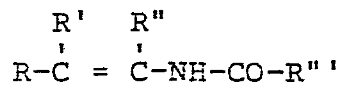

und/oder der Formel

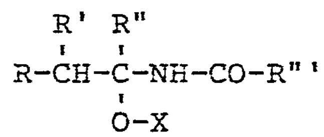

verwendet, wobei in diesen Formeln

R, R' und R" für gleiche oder verschiedene Reste stehen und Wasserstoff oder einen aliphatischen Kohlenwasserstoffrest mit 1 bis 4 Kohlenstoffatomen bedeuten,

R"' für Wasserstoff oder einen gegebenenfalls inerte Substituenten aufweisenden aliphatischen Kohlenwasserstoffrest mit 1 bis 20, vorzugsweise 1 bis 4 Kohlenstoffatomen, cycloaliphatischen Kohlenwasserstoffrest mit 3 bis 15, vorzugsweise 6 Kohlenstoffatomen, aromatischen Kohlenwasserstoffrest mit 6 bis 15, vorzugsweise 6 bis 10 Kohlenstoffatomen, araliphatischen Kohlenwasserstoffrest mit 7 bis 15, vorzugsweise 7 bis 8 Kohlenstoffatomen, einen Aroxyrest mit 6 bis 15 Kohlenstoffatomen, vorzugsweise Phenoxyrest oder

einen Alkoxyrest mit 1 bis 10, vorzugsweise 1 bis 4 Kohlenstoffatomen, der gegebenenfalls Substituenten der Formel

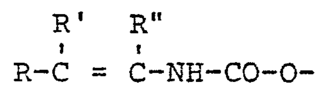

und/oder

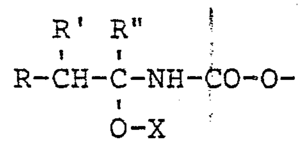

aufweist, steht und

X die in Anspruch 1 genannte Bedeutung hat.

3. Verfahren gemäß Anspruch 1 und 2, dadurch gekennzeichnet, daß man als alkoholische Hydroxylgruppen aufweisende Verbindungen, gegebenenfalls Ether- oder Esterbrücken aufweisende 2- bis 6-wertige aliphatische Alkohole eines Molekulargewichts von 62 bis 5000 oder Gemische derartiger Alkohole verwendet.

4. Gemäß Anspruch 1 bis 3 erhältliche, reversibel blokkierte und gegebenenfalls freie alkoholische Hydroxylgruppen aufweisende Polyhydroxylverbindungen.

5. Lagerstabile, unter dem Einfluß von Hitze vernetzbare, ein Bindemittel und gegebenenfalls die aus der Lacktechnologie bekannten Hilfs- und Zusatzmittel enthaltende Beschichtungsmittel, dadurch gekennzeichnet, daß das Bindemittel aus

a) Kombinationen von, gemäß Anspruch 1 bis 3 erhältlichen, reversibel blockierte alkoholische Hydroxylgruppen aufweisenden Polyhydroxylverbindungen und Polyisocyanaten mit gegebenenfalls blockierten Isocyanatgruppen

und/oder aus

b) hitzevernetzbaren Umsetzungsprodukten von (i) gemäß Anspruch 1 bis 3 erhältlichen reversibel blockierte und freie alkoholische Hydroxylgruppen aufweisenden Polyhydroxylverbindungen mit (ii) überschüssigen Mengen, bezogen auf die freien Hydroxygruppen und die Isocyanatgruppen, an organischen Polyisocyanaten

besteht.

6. Beschichtungsmittel gemäß Anspruch 5, dadurch gekennzeichnet, daß es, die Polymerisation der bei der Hitzevernetzung der Beschichtungsmittel freigesetzten, olefinische Doppelbindungen aufweisenden, Blockierungsmittel initiierende Radikalbildner enthält.

Europäisches Patentamt

# EUROPÄISCHER RECHERCHENBERICHT

0122453

Nummer der Anmeldung

EP 84 10 2702

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-3 558 563 (A.L. CUNNINGHAM)<br>--- | | C 08 G 63/76<br>C 08 G 65/32<br>C 08 G 18/28<br>C 08 G 18/42<br>C 07 C 125/065<br>C 07 C 103/38<br>C 08 F 8/30<br>C 08 F 283/00 |
| A | FR-A-2 230 678 (DOW)<br>----- | | |

| RECHERCHIERTE SACHGEBIETE (Int. Cl. 3) |
|---|
| C 08 G<br>C 07 C<br>C 08 F |

Der vorliegende Recherchenbericht wurde für alle Patentansprüche erstellt.

| Recherchenort | Abschlußdatum der Recherche | Prüfer |
|---|---|---|
| DEN HAAG | 05-07-1984 | VAN PUYMBROECK M.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82